Europäisches Patentamt

European Patent Office

Office européen des brevets

(11) Veröffentlichungsnummer: **0 350 621**

**A1**

## EUROPÄISCHE PATENTANMELDUNG

(21) Anmeldenummer: 89110422.6

(22) Anmeldetag: 09.06.89

(51) Int. Cl.⁴: **B62K 21/14**

(30) Priorität: 14.06.88 DE 8807705 U

(43) Veröffentlichungstag der Anmeldung:
17.01.90 Patentblatt 90/03

(84) Benannte Vertragsstaaten:
AT BE CH DE ES FR GB GR IT LI LU NL SE

(71) Anmelder: Simic, Tino
St. Anton Strasse 14
D-4150 Krefeld(DE)

(72) Erfinder: Simic, Tino
St. Anton Strasse 14
D-4150 Krefeld(DE)

(54) Federnde Zweirad Lenkerstütze.

(57) Federnde Zweirad Lenkerstütze, **dadurch gekennzeichnet**, daß das federnde Teil in einem Führungsrohr über ein Gleitmittel im oder außen am Zweiradrahmen befestigt und mit einer neu entwickelten Verdrehungssperre versehen ist, so daß sich die Verdrehungskräfte in einem gemeinsamen Drehschnittpunkt,

OHNE Reibungseffekt, gegenseitig aufheben und mit einer innen, oder außerhalb der Lenkerstütze montierten Stahlfeder, beide gegendruckeinstellbar und mit einer flachen Kennlinie, ausgestattet ist.

FIG 1

EP 0 350 621 A1

## federnde Zweirad Lenkerstütze.

Die Erfindung bezieht sich auf eine Vorrichtung zur federnden Aufhängung des Zweirad Lenkers, so daß die durch Bodenunebenheiten wirkenden Stöße nicht an die fahrende Person weitergeleitet werden können.

Eine Vielzahl von Entwürfen federnder Lenkerstützen sind seit ca. 1920 bekannt, ohne daß es bis heute gelungen war, eine federnde Zweirad Lenkerstütze zu konstruieren, die ihren Anforderungen gut und kostengünstig entsprechen würde.

Dafür war in erster Linie die verwendeten Drehverhinderungen (Verdrehungssperren), der federnden Lenkerstützen verantwortlich.

Bisher waren die Verdrehungssperren, die kein Zwischenspiel aufwiesen und den Federweg nicht behinderten, zu aufwendig und dadurch zu kostenintensiv (z.B. DE-Patent 602077/1934).

Andere Konstruktion die ihre Funktion ausübten durch:
- verschiedenartige Stifte oder Keile, oder
- Verwendung unrunder Teile, wie z.B. konzentrich geführte Vier-oder Sechskantrohre, oder
- längs verlaufende Sicken in beiden Teilen,
waren, so ausgeführt, daß sie die Verhinderung der Verdrehung ohne Zwischenspiel, auf Dauer; nicht garantierten oder den Federweg behinderten, so daß sie trotz überzeugender Vorteile einer federnden Zweirad Lenkerstütze deren Vermarktung verhinderten.

Der Erfindung liegt die Aufgabe zu Grunde, die zuvor genannten Nachteile der bekannten federnden Zweirad Lenkerstützen aufzuheben und die Möglichkeit zu schaffen, auf einfache, günstige und dauerhaft-sichere Weise eine gute Federung für die fahrende Person zu ermöglichen.

Darstellung der Erfindung :

Diese Aufgabe der federnden Zweirad Lenkerstütze, die über eine Feder gegenüber dem Rahmen abgefedert und mit Mitteln zur Verhinderung einer Verdrehung versehen ist, ist erfindungsgemäß durch eine speziell entwickelte Verdrehungssperre so gelöst,
daß die gegenseitige Verdrehung nicht in unmittelbarer Nähe der Achse der federnden Teile verhindert wird, sondern die Kräfte, durch dafür vorgesehene Teile der Erfindung, jeweils zu zwei weit von der Achse der federnden Teile liegenden Punkten geführt und aufgefangen werden und über in diesen Punkten drehbar montierte Verbindungen zu einem gemeinsamen Drehpunkt übertragen werden, welcher die Verdrehung verhindert, weil sich in ihm die Verdrehungskräfte gegenseitig aufheben.

Die speziell entwickelte Verdrehungssperre schafft eine Verhinderung der gegenseitigen Verdrehung, so daß auch nach längerer intensiver Benutzung kein Spiel entstehen kann, wobei leichtgängige Führung der axial gegeneinander federnden Teile garantiert wird, ihr Aufbau kostengünstig und ihre Wirkungsweise auf Dauer sicher ist.

Die federnde Zweirad Lenkerstütze ist im wesentlichen aus zwei über ein Gleitmittel ineinander geführten Rohren mit außen montierte Verdrehungssperre gebaut.

Das äußere Rohr, Führungsrohr, ist über das Befestigungsteil im oder am Rahmen befestigt und in ihm gleitet gegen den Druck der Feder das innere Rohr.

Die Fahrradlenkerstütze ist über das Befestigungsrohr im Fahrradrahmen oder außerhalb des Fahrradrahmens, starr oder in Winkellage einstellbar, so befestigt, daß sie bei ihrer Federungsbewegung die kleinstmögliche Reibung zwischen den federnden Teilen hat und dadurch den bestmöglichen Federungskomfort bietet.

Die Feder wird dem Druck der fahrenden Personen, durch mechanische Einwirkung an die dafür vorgesehene Verstellschraube, angepaßt.

Beschreibung der Zeichnungen :

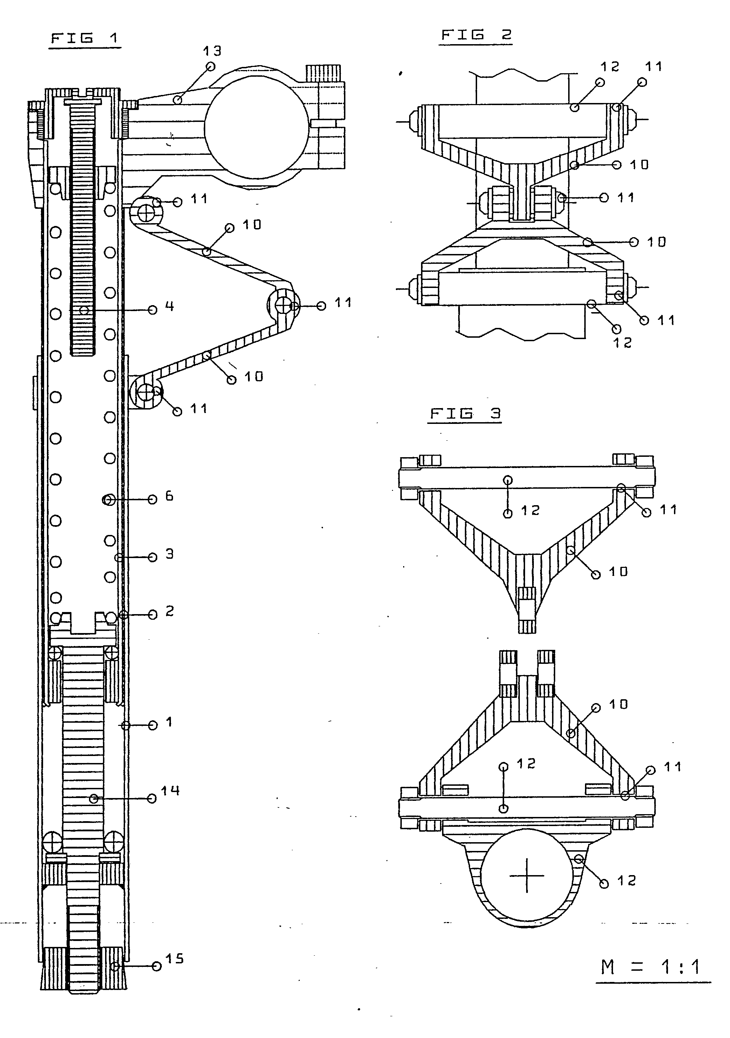

Fig. 1 Schnitt der kompletten federnden Zweirad Lenkerstütze, für Montage im Rahmen an Stelle der starren Stütze.

Fig. 2 Vorderansicht der verwendeten Verdrehungssperre, aus dieser Zeichnung sind alle einzelnen Teile der Sperre in ihrer Arbeitslage und ihrer Abhängigkeit voneinander zu ersehen.

Fig. 3 Schnitte der verwendeten Verdrehungssperre, inklusiv dem Befestigungsteil im auseinandergeklappten Zustand.

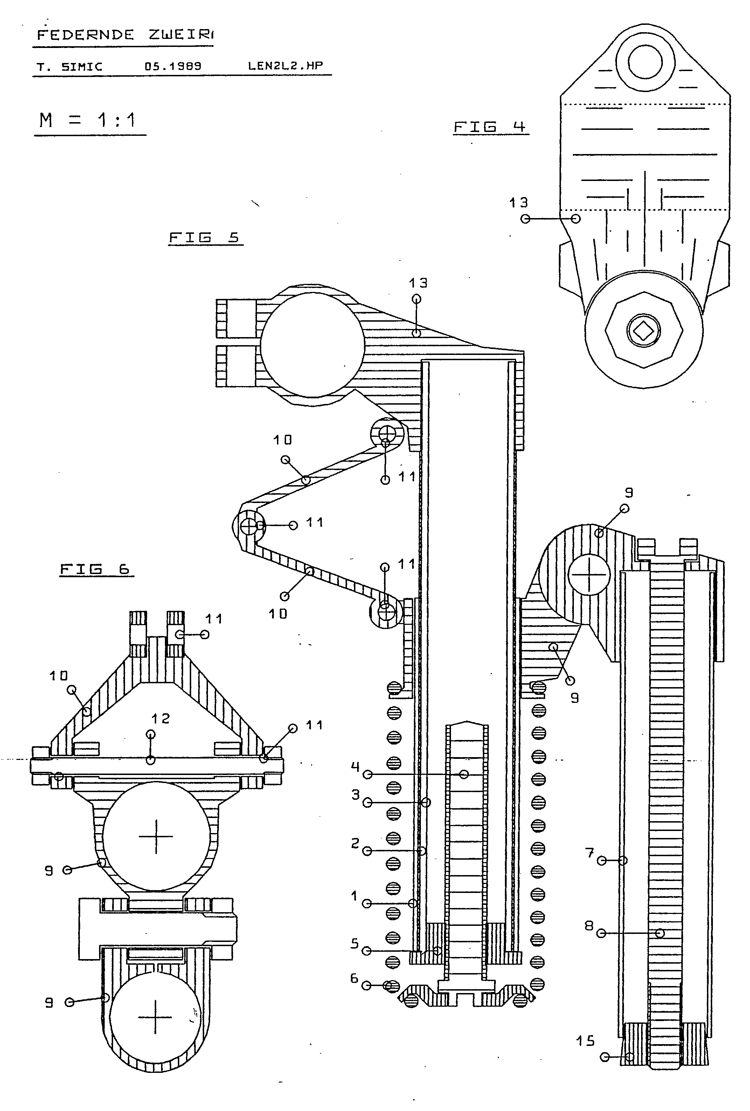

Fig. 4 Ansicht von oben auf das Lenker-Befestigungsteil.

Fig. 5 Schnitt der kompletten federnden Zweirad Lenkerstütze, inkl. dem im Neigungswinkel verstellbaren Befestigungsteils für Montage außerhalb des Rahmens.

Fig. 6 Schnitt der in Winkellage einstellbare Befestigung mit einem Teil der Verdrehungssperre.

Zahlen beziffern einzeln :

1 Führungsrohr der federnden Lenkerstütze

2 Gleitmittel zwischen Innen- und Führungsrohr

3 Lenkerstützen Innenrohr

4 Verstellschraube zur Gegendruckanpaßung

5 Bodenteil des Innenrohhrs mit Gewinde für Verstellschraube

6 Stahlfeder der Lenkerstütze

7 Rohrstück zur Rahmenbefestigung der Lenkerstütze

8 Befestigungsschraube

9 Hälfte des winkelverstellbaren Befestigungsteils

10 Verbindungteile der Verdrehungssperre

11 Drehgelenke der Verdrehungssperre

12 Eine Seite der Verdrehungssperre

13 Lenker Befestigungteil

14 Befestigungsschraube und Federauflage

15 Konisches Befestigungsteil

Bester Weg zur Ausführung der Erfindung

Die federnde Zweirad Lenkerstütze ist in ihren Ausführungen, aus einfachen Einzelteilen konstruiert, dadurch kann ihre Produktion entweder zusammen mit den Zweirädern, oder auch separat erfolgen, so daß sie entweder als Erstausstattung oder auch nachträglich angebracht werden kann.

Gewerbliche Anwendbarkeit

Die Erfindung beitet den Vorteil, daß sie zum Beispiel nachträglich durch einfache Handhabung an jede bekannte Zweiradrahmenausführung anzubringen ist und somit sehr breitfächig an vielen verschiedenen Zweirädern Einsatzmöglichkeiten finden kann.

Die Neuentwicklung schafft die Möglichkeit für die Produktion einer einfachen, günstigen und dauerhaften, für den Zweiradteile- und zubehörmarkt interessanten, federnden Zweirad Lenkerstütze.

**Ansprüche**

1. Federnde Zweirad Lenkerstütze, die über eine Feder gegenüber dem Rahmen abgefedert und mit Mitteln zur Verhinderung einer Verdrehung versehen ist, **dadurch gekennzeichnet**, daß die Lenkerstütze mit dem der Lenkerbefestigung gegenüberliegenden Ende in ein Führungsrohr (1) eingesteckt und darin gegen den Druck der Feder (6) axial verschiebbar ist und daß das Führungsrohr (1) im Zweiradrahmen befestigt wird.

2. Federnde Zweirad Lenkerstütze nach Anspruch 1, **dadurch gekennzeichnet**, daß die Feder (6) eine Gasfeder ist.

3. Federnde Zweirad Lenkerstütze nach Anspruch 1, **dadurch gekennzeichnet**, daß die Feder (6) eine Schraubenfeder ist.

4. Federnde Zweirad Lenkerstütze nach einem der Ansprüche 1 bis 3, **dadurch gekennzeichnet**, daß die Gegenkraft der Feder (6) einstellbar ist.

5. Federnde Zweirad Lenkerstütze nach einem der Ansprüche 1 bis 4, **dadurch gekennzeichnet**, daß das Führungsrohr (1) mit einem befestigungteil (15) im Rahmen an der Stelle, wo sonst die stare Lenker stutze befestigt wird, befestigt ist.

6. Federnde Zweirad Lenkerstütze nach einem der Ansprüche 1 bis 4, **dadurch gekennzeichnet**, daß das Führungsrohr (1) im Winkel mit einem Rohrstück (7) verbunden ist, welches in die obere Öffnung des Rahmenholms eingesteckt und mit einer Befestigungsschraube festgeklemmt ist.

7. Federnde Zweirad Lenkerstütze nach Anspruch 6, **dadurch gekennzeichnet**, daß das Führungsrohr (1) mit dem Rohrstück (7) einstückig ist.

8. Federnde Zweirad Lenkerstütze nach Anspruch 6, **dadurch gekennzeichnet**, daß das Führungsrohr (1) und das Rohrstück (7) in der Winkellage zueinander einstellbar miteinander befestigt sind.

9. Federnde Zweirad Lenkerstütze nach Anspruch 3, **dadurch gekennzeichnet**, daß die Schraubenfeder (6), das Führungsrohr (1) koaxial umgebend, mit einem Ende am Führungsrohr (1) und mit dem anderen Ende an der Verstellschraube (4) befestigt ist.

10. Federnde Zweirad Lenkerstütze nach einem der Ansprüche 1 bis 9, **dadurch gekennzeichnet**, daß die Mittel zur Verhinderung des Verdrehens des Innenrohrs (3) der Zweirad Lenkerstütze gegenüber dem Führungsrohr (1) aus zwei spiegelbildlich gleich gelenkig miteinander verbundenen Gabeln (10) bestehen.

FEDERNDE ZWEIRA

T. SIMIC    04.1989

FIG 1

FIG 2

FIG 3

M = 1:1

FEDERNDE ZWEIR

T. SIMIC     05.1989     LEN2L2.HP

M = 1:1

FIG 4

13

FIG 5

13

10

11

11

11

10

9

9

9

FIG 6

11

10

12

11

9

9

4

3

2

1

5

6

7

8

15

Europäisches Patentamt

**EUROPÄISCHER RECHERCHENBERICHT**

Nummer der Anmeldung

EP 89 11 0422

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | CH-A- 667 433 (J. JENTSCHMANN) * Insgesamt * | 1,3,4,6 ,8 | B 62 K 21/14 |
| A | --- | 2,9,10 | |
| X | FR-A- 621 878 (V. MAYANDIA ARNAUDAS) * Insgesamt * | 1,3-5, 10 | |
| | --- | | |
| X | DE-A-3 420 862 (H. MISCHLER) * Figur 3; Seite 14, Zeile 15 – Seite 16, Zeile 9 * | 1,2,4,5 | |
| | --- | | |
| X | FR-E- 7 210 (E. MERESSE) * Insgesamt * | 1,3,5 | |
| A | --- | 9,10 | |
| A | US-A-3 083 038 (A.E. MOULTON) * Figuren 1-3; Spalte 2, Zeilen 40-43 * ----- | 10 | |

| | RECHERCHIERTE SACHGEBIETE (Int. Cl.4) |
|---|---|
| | B 62 K |

Der vorliegende Recherchenbericht wurde für alle Patentansprüche erstellt

| Recherchenort | Abschlußdatum der Recherche | Prüfer |
|---|---|---|
| DEN HAAG | 21-09-1989 | FRANKS B.G. |

EPO FORM 1503 03.82 (P0403)